# EUROPÄISCHE PATENTSCHRIFT

(11) **EP 1 922 242 B1**
(45) Veröffentlichungstag und Bekanntmachung des Hinweises auf die Patenterteilung: **03.11.2010**
(21) Anmeldenummer: 06775936.5
(22) Anmeldetag: 08.09.2006
(51) Int. Cl.: B62D 29/00, B62D 21/11, B62D 21/12

(54) **ACHSTRÄGER**
AXLE SUPPORT
SUPPORT A AXE

(30) Priorität: 09.09.2005 DE 102005042985
(43) Veröffentlichungstag der Anmeldung: 21.05.2008
(73) Patentinhaber: KSM CASTINGS GMBH, 31137 Hildesheim (DE); IAM Ingenieurgesellschaft für Allgemeine Maschinentechnik mbH, 08525 Plauen (DE)
(72) Erfinder: BUSCHJOHANN, Thomas, 31171 Nordstemmen (DE); KAUERT, Heiko, 14974 Ludwigsfelde (DE)
(74) Vertreter: Thömen, Uwe
(86) Internationale Anmeldenummer: PCT/DE2006/001575
(87) Internationale Veröffentlichungsnummer: WO 2007/028372

(56) Entgegenhaltungen:
- EP-A1- 0 530 594
- WO-A-00/07867
- WO-A-01/23244

## Beschreibung

Die Erfindung bezieht sich auf einen Achsträger, auch Fahrschemel oder Hilfsrahmen genannt, insbesondere für Hinterachsen von Kraftfahrzeugen mit unangetriebener Hinterachse. Ein gattungsgemäßer Achsträger ist in der EP 0 530 594 A1 beschrieben.

Solche Achsträger bestehen in der Regel aus zwei Längs- und zwei Querlenkern, aus Hohlprofilen, die untereinander verbunden, insbesondere verschweißt sind. Die Achsträger weisen Befestigungsstellen, Halterungen, Anlenkstellen oder dergleichen zur Befestigung von Achs- oder anderen Elementen auf sowie zur Befestigung der Achsträger selbst an Karosseriebereichen als vorgefertigte Einheit mitsamt den Achs- oder anderen Elementen. Diese Befestigungsstellen müssen vorgefertigt sein und am Achsträger für sich befestigt werden, was in der Regel durch Schweißen erfolgt. Derartige Achsträger sind daher aufwändig und teuer, und ihr Einsatz ist beschränkt auf einen Typ Fahrzeug, für den sie konstruiert wurden.

Der vorliegenden Erfindung lag die Aufgabe zugrunde, Achsträger preiswerter zu gestalten und den Anwendungsbereich zumindest von Einzelbauteilen für mehrfache Anwendungen zu erweitern, so dass lediglich durch Veränderung der anderen Bauteile unterschiedliche Fahrzeugtypen mit gleichen Einzelbauteilen zu versorgen sind, um so wegen der höheren Stückzahlen weitere Verbilligungen zu erzielen.

Dies wird gemäß der Erfindung nach Anspruch 1 dadurch erzielt, dass der Achsträger als zusammensetabares Bauteil aus Verbindungselementen und aus zwei Längskonsolen aus Leichtmetallguss besteht, die untereinander durch obere und untere Verbindungselemente zu verbinden sind, wobei die Verbindungselemente flächige Blechformteile sind. Dabei ist es zweckmäßig, wenn die Längskonsolen aus einer Leichtmetalllegierung bestehen. Derartige Blechformtelle können auch unterbrochene, versteifte Blechformteile sein oder durch einzelne profilierte Querträger oder Streben gebildet sein. In besonders einfacher und preiswerter Weise können die Längskonsolen mit den Querverbindungselementen, nämlich zum Beispiel Blechformtellen, profilierten Querträgern oder Streben durch Verbindungselemente, wie Schrauben oder Niete, miteinander befestigt werden, wobei die Befestigungsstellen, also zum Beispiel Bohrungen oder Gewinde, besonders einfach und preiswert im Leichtmetallguss vorzusehen sind, zum Beispiel in eigens im Guss vorgesehene Anformungen, Knoten, Augen, Laschen oder dergleichen. In zweckmäßiger Weise können die Konsolen zum Beispiel solche Anlenkstellen aufweisen zur Befestigung derselben oder das Achsträgers, gegebenenfalls mitsamt daran montierten Achs- oder anderen Elementen, an Karosserietellen.

Weiterhin ist es vorteilhaft, wenn wenigstens eine der Konsolen Anlenk- bzw. Befestigungsstellen für mindestens drei der nachfolgend angeführten Achselemente aufweist:
- für die vorderen oberen linken und/ oder rechten Querlenker
- für die vorderen unteren linken und/ oder rechten Querlenker
- für die hinteren oberen linken und/ oder rechten Querlenker
- für die hinteren unteren linken und/ oder rechten Querlenker
- für die Spurstange(n)
- für die Stoßdämpfer
- für die Drehstabfederung.

Solche Anlenkstellen lassen sich gusstechnisch in besonders günstiger Weise herstellen. Weiterhin ist es vorteilhaft, wenn zumindest einzelne der Anlenk- bzw. Befestigungsstellen durch mit Durchgangsbohrungen versehene vom Konsolenkörper abstehende, mit diesem einteilige Halterungen gebildet sind. Darüber hinaus können zumindest einzelne der Halterungen in ebenfalls günstiger Weise um die Bohrungen ösenartig verstärkt sein. Dabei können zumindest einzelne der Halterungen laschenartig ausgebildet sein. Gusstechnisch einfach und preiswert lassen sich auch Verstärkungssicken bilden, die zumindest einzelne der Befestigungsstellen oder Halterungen untereinander verbinden. Zweckmäßigerweise werden zumindest einzelne der oberen und unteren Befestigungsstellen oder Halterungen untereinander durch solche Verstärkungssicken verbunden. Weiterhin kann es zweckmäßig sein, wenigstens einzelne der Befestigungsstellen, zum Beispiel die für die Querlenker oder die Spurstange(n), durch zwei, das zu befestigende Element zwischen sich aufnehmende Halterungen auszubilden.

Es ist ersichtlich, dass sowohl die Konsolen selbst, als auch die Halterungen, die Anlenk- bzw. Befestigungsstellen für die Befestigung von Achs- und anderen Elementen, sowie solche Befestigungsstellen für die Anlenkung an Karosseriebereichen, gusstechnisch sehr günstig herstellbar sind. Weiterhin wird durch die Erfindung die Möglichkeit geschaffen, Längslenker für unterschiedliche Spurweiten, also für unterschiedliche Fahrzeugtypen, einzusetzen.

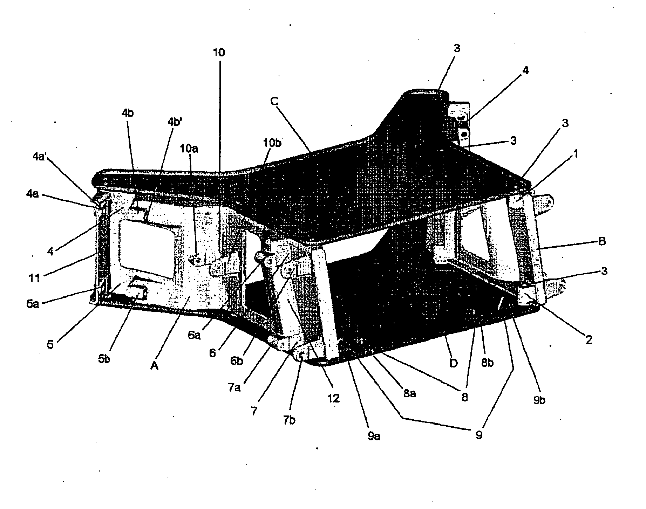

Anhand des in der Figur dargestellten Ausführungsbeispieles sei die Erfindung näher erläutert:
Der Achsträger I besteht aus zwei Längskonsolen A, B aus einer Leichtmetall-Gusslegierung und je einem oberen und unteren die beiden Konsolen verbindenden Blechformteil C, D. Zur Befestigung von Konsolen A und B sowie Blechformteilen C und D sind an den Konsolen mehrere Befestigungsstellen 1, 2 angegossen, in die in Gewindebohrungen reingeschraubte Befestigungsschrauben vorgesehen sind.

Im vorliegenden Ausführungsbeispiel sind die Konsolen A, B spiegelbildlich ausgebildet. Der besseren Übersichtlichkeit wegen sind einzelne Bereiche beziehungsweise Befestigungsstellen daher nur an der einen oder anderen Konsole dargestellt.

An den Konsolen A, B sind weiterhin Anlenk- bzw. Befestigungsstellen 4 für die vorderen oberen linken und rechten Querlenker vorgesehen, Befestigungsstellen 5 für die vorderen unteren linken und rechten Querlenker, Befestigungsstellen 6 für die hinteren oberen linken und rechten Querlenker, Befestigungsstellen 7 für die hinteren unteren linken und rechten Querlenker, Befestigungsstellen 8 für die Querstabilisator sowie Befestigungsstellen 9 für die linken und rechten Stoßdämpfer. Weitere Befestigungsstellen 10 sind für die linke und rechte Spurstange vorgesehen.

Die Befestigungsstellen 4 bis 10 bestehen aus jeweils zwei Halterungen 4a, 4b bis 10a, 10b, die Bohrungen aufweisen, von denen der Einfachheit halber lediglich die Bohrungen 4a'und 4b' mit Bezugszeichen versehen sind.

Die Halterungen 4a, 4b, 5a, 5b, 6a, 6b, 7a, 7b, 8a, 8b, 9a, 9b und 10a, 10b sind laschenartig ausgebildet und einteilig mit den Längskonsolen A, B, wobei die Laschen 4a, 5a; 6a, 7a durch Verstärkungssicken 11,1 2 untereinander verbunden sind. Die Halterungen 4a, 5a sind ösenartig um ihre Bohrungen herum verstärkt. Die Halterungen der Befestigungsstellen 4, 5, 6, 7 und 10 sind derart ausgebildet, dass sie das zu befestigende Bauteil, also z.B. Querlenker und Spurstange zwischen sich aufnehmen können.

## Patentansprüche

1. Achsträger, insbesondere Hinterachsträger für KFZ mit unangetriebener Hinterachse, als zusammensetzbares Bauteil aus Verbindungselementen und aus zwei Längskonsolen (A, B) aus Leichtmetall-Guss, die untereinander durch die Verbindungselemente zu verbinden sind, **dadurch gekennzeichnet, dass** als Verbindungselemente ein oberes flächiges Blechformteil (C) und ein unteres flächiges Blechformteil (D) vorgesehen sind.

2. Achsträger nach Anspruch 1, **dadurch gekennzeichnet, dass** die Längskonsolen (A, B) aus einer Leichtmetalllegierung bestehen.

3. Achsträger nach Anspruch 1 oder 2, **dadurch gekennzeichnet, dass** zumindest eines der Verbindungselemente (C, D) als Querträger ausgebildet ist.

4. Achsträger nach einem der Ansprüche 1 bis 3, **dadurch gekennzeichnet, dass** die Konsolen (A, B) und/oder die Verbindungselemente (C, D) durch Befestigungselemente miteinander verbindbar sind.

5. Achsträger nach einem der Ansprüche 1 bis 4, **dadurch gekennzeichnet, dass** die Konsolen (A, B) Anlenk- bzw. Befestigungsstellen zur Verbindung derselben oder des Achsträgers mit Karosserieteilen bzw. -bereichen besitzen.

6. Achsträger nach einem der Ansprüche 1 bis 5, **dadurch gekennzeichnet, dass** wenigstens eine der Konsolen (A, B) Anlenk- bzw. Befestigungsstellen für mindestens drei der nachfolgend angeführten Achselemente besitzt:
- für die vorderen oberen linken und/ oder rechten Querlenker
- für die vorderen unteren linken und/ oder rechten Querlenker
- für die hinteren oberen linken und/ oder rechten Querlenker
- für die hinteren unteren linken und/ oder rechten Querlenker
- für die Spurstange(n)
- für die Stoßdämpfer
- für die Drehstabfederung,

7. Achsträger nach Anspruch 6, **dadurch gekennzeichnet, dass** zumindest einzelne der Anlenk- bzw. Befestigungsstellen durch mit Durchgangsbohrungen versehene, vom Konsolenkörper abstehende, mit diesem einteilige Halterungen gebildet sind.

8. Achsträger nach Anspruch 7, **dadurch gekennzeichnet, dass** zumindest einzelne der Halterungen laschenartig ausgebildet sind.

9. Achsträger nach einem der Ansprüche 6 bis 8, **dadurch gekennzeichnet, dass** zumindest einzelne der Befestigungsstellen durch zwei das zu befestigende Achselement zwischen sich aufnehmende Halterungen gebildet sind.

10. Achsträger nach einem der Ansprüche 7 bis 9, **dadurch gekennzeichnet, dass** zumindest einzelne der Halterungen um die Bohrungen ösenartig verstärkt sind.

11. Achsträger nach einem der Ansprüche 6 bis 10, **dadurch gekennzeichnet, dass** zumindest einzelne der Befestigungsstellen oder Halterungen untereinander durch Verstärkungssicken verbunden sind.

12. Achsträger nach einem der Ansprüche 6 bis 11, **dadurch gekennzeichnet, dass** zumindest einzelne der oberen und unteren Befestigungsstellen oder Halterungen untereinander durch Verstärkungssicken verbunden sind.

## Claims

1. An axle support, in particular a rear axle support for motor vehicles with an unpowered rear axle, as a component that can be assembled, made of connecting members and of two longitudinal brackets (A, B) that are made of light-metal cast and that are to be connected to one another by the connecting members, **characterised in that** an upper flat sheet-metal moulded part (C) and a lower flat sheet-metal moulded part (D) are provided as connecting members.

2. The axle support according to Claim 1, **characterised in that** the longitudinal brackets (A, B) consist of a light-metal alloy.

3. The axle support according to claim 1 or 2, **characterised in that** at least one of the connecting members (C, D) is configured as a cross-beam.

4. The axle support according to one of claims 1 to 3, **characterised in that** the brackets (A, B) and/or the connecting members (C, D) can be connected to one another by mounting members.

5. The axle support according to one of claims 1 to 4, **characterised in that** the brackets (A, B) possess linking or mounting locations for connecting these or the axle support to car body parts or areas

6. The axle support according to one of claims 1 to 5, **characterised in that** at least one of the brackets (A, B) possesses linking or mounting locations for at least three of the axle members listed hereafter:
- for the front upper left and/or right transverse links
- for the front lower left and/or right transverse links
- for the rear upper left and/or right transverse links
- for the rear lower left and/or right transverse links
- for the tie rod(s)
- for the shock absorbers
- for the torsion bar suspension.

7. The axle support according to Claim 6, **characterised in that** at least several of the linking or mounting locations are formed by holding devices, which are provided with through-holes and which protrude from the bracket body and form one piece with it.

8. The axle support according to Claim 7, **characterised in that** at least several of the holding devices are configured in a lug-like manner.

9. The axle support according to one of claims 6 to 8, **characterised in that** at least several of the mounting locations are formed by two holding devices which receive between them the axle member which is to be mounted.

10. The axle support according to one of claims 7 to 9, **characterised in that** at least several of the holding devices are reinforced around the bores in the manner of an eyelet.

11. The axle support according to one of claims 6 to 10, **characterised in that** at least several of the mounting locations or holding devices are connected to one another by reinforcing fins.

12. The axle support according to one of claims 6 to 11, **characterised in that** at least several of the upper and lower mounting locations or holding devices are connected to one another by reinforcing fins.

## Revendications

1. Support d'essieu, en particulier support d'essieu arrière pour véhicule automobile avec essieu arrière non entraîné, support d'essieu, qui est conçu comme composant pouvant être assemblé comprenant deux consoles longitudinales (A, B) coulées en métal léger, qui peuvent être reliées par des éléments d'assemblage, **caractérisé en ce qu'**une mince pièce moulée en tôle supérieure (C) et une mince pièce moulée en tôle inférieure (D) sont prévues comme éléments d'assemblage.

2. Support d'essieu suivant la revendication 1, **caractérisé en ce que** les consoles longitudinales (A, B) sont en alliage léger.

3. Support d'essieu suivant la revendication 1 ou 2, **caractérisé en ce qu'**au moins un des éléments d'assemblage (C, D) est conçu comme traverse.

4. Support d'essieu suivant une des revendications 1 à 3, **caractérisé en ce que** les consoles (A, B) et/ou les éléments d'assemblage (C, D) peuvent être reliés entre eux par des éléments de fixation.

5. Support d'essieu suivant une des revendications 1 à 4, **caractérisé en ce que** les consoles (A, B) possèdent des points d'articulation ou de fixation pour relier celles-ci ou le support d'essieu à des parties ou zones de la carrosserie.

6. Support d'essieu suivant une des revendications 1 à 5, **caractérisé en ce qu'**au moins une des consoles (A, B) possède des points d'articulation ou de fixation pour au moins trois des éléments d'essieu énumérés ci-après :
- pour les triangles avant supérieurs gauche et/ou droite
- pour les triangles avant inférieurs gauche et/ou droite
- pour les triangles arrière supérieurs gauche et/ou droite
- pour les triangles arrière supérieurs gauche et/ou droite
- pour la(les) barre(s) d'accouplement
- pour les amortisseurs
- pour la suspension à barres de torsion.

7. Support d'essieu suivant la revendication 6, **caractérisé en ce qu'**au moins quelques points d'articulation ou de fixation isolés sont formés par des attaches, qui s'éloignent du corps de console, avec lequel elles ne forment qu'une seule partie, et qui sont pourvues de trous de passage.

8. Support d'essieu suivant la revendication 7, **caractérisé en ce qu'**au moins quelques-unes des attaches sont conçues en forme de pattes.

9. Support suivant une des revendications 6 à 8, **caractérisé en ce qu'**au moins quelques-uns des points de fixation sont formés par deux attaches recevant l'élément d'essieu à fixer entre elles.

10. Support d'essieu suivant une des revendications 7 à 9, **caractérisé en ce qu'**au moins quelques-unes des attaches sont renforcées autour des forures à la manière d'oeillets.

11. Support d'essieu suivant une des revendications 6 à 10, **caractérisé en ce qu'**au moins quelques-uns des points de fixation ou attaches sont reliés entre eux par des nervures de renforcement.

12. Support d'essieu suivant une des revendications 6 à 11, **caractérisé en ce qu'**au moins quelques-uns des points de fixation ou attaches supérieurs et inférieurs sont réliés entre eux par des nervures de renforcement.
